# EUROPEAN PATENT APPLICATION

(11) **EP 0 802 303 A1**
(43) Date of publication of application: **22.10.1997**
(21) Application number: 97302505.9
(22) Date of filing: 11.04.1997
(51) Int. Cl.: E21B 33/12, F16J 15/12, B29C 65/00

(54) **Sealing apparatus**

(30) Priority: 17.04.1996 US 634010
(71) Applicant: Halliburton Energy Services, Inc., Dallas, Texas 75381-9052 (US)
(72) Inventor: Echols, Ralph H., Dallas, Texas 75287 (US); Ray, Thomas W., Plano, Texas 75075 (US); Welch, William R., Carrollton, Texas 75007 (US); Hendrickson, James D., Carrollton, Texas 75007 (US); Ross, Colby M., Carrollton, Texas 75006 (US)
(74) Representative: Wain, Christopher Paul

(57) **Abstract**

A sealing apparatus (10) comprises a sintered metal portion (12) and an elastomeric portion (16) molded thereto or impregnated therein. The sintered metal portion (12) is substantially porous, and at least a portion of the elastomeric portion extends into porous openings formed in the surface (14) of the sintered metal portion (12). The sintered metal sealing apparatus (10) is particularly well adapted for use in oil and gas well equipment.

## Description

This invention relates to sealing apparatus and, more particularly, to a sealing apparatus having a metal portion with an elastomeric portion molded thereto. Such a sealing apparatus is especially well adapted for heavy-duty sealing requirements such as found in oil and gas well equipment.

Applications for sealing apparatus are, of course, well known in the art. The use of sealing apparatus with elastomeric members molded onto metal is also generally known. In many applications, the bonding or shear strength between the elastomeric portion and the metal portion is very important. A number of such applications relating to oil and gas well equipment will be described herein.

Otis Engineering Corporation of Dallas, U.S.A., has developed a method of accomplishing downhole well maintenance utilizing hydraulic pressure and flow to provide the force required for tool movement and manipulation. This general technique utilizes what is referred to as through-flowline (TFL) equipment. This equipment is particularly useful for subsea completions, directional holes drilled from offshore platforms and/or deep deviated holes where wireline work is sometimes impossible, or at best, extremely difficult. A tubular flow line is used to provide access for the service tools downhole. Basically, the tools are pumped down the tubing into the well, and the direction of movement may be reversed by controls at the surface.
Typically, the downhole components include a packer which is set in the well casing and has a landing nipple therebelow. Running tools may be used to install various TFL tools in the landing nipple. Also, pulling tools may be used to retrieve the TFL tools. Both the tools being run into the well and the pulling tools are moved by one or more piston units which transport the TFL tools in and out of the hole and develop sufficient force by utilization of the pump pressure to move in the tubing. The prior art piston units include a tubular mandrel with an elastomeric member molded thereon. The elastomer is preferably rubber and has a plurality of fins extending radially therefrom. The fins act as pressure regulators as they contact the inside of the tubing. When pressure is applied in excess of the total amount the fins of a piston unit can hold, the fins bypass pressure and fluid to the downstream elements of the TFL tool string. In this way, a plurality of piston units may be utilized which increases the force available to move the tool string.

A potential limitation in the prior piston units is the shear strength of the bond between the elastomeric portion and the metal mandrel. In some cases, the bond may fail so that the elastomeric member moves longitudinally on the tubular mandrel. When this occurs, the piston unit may fail to function properly.

In another well application, squeeze or compression packers are well known. Generally, such packers have an elastomeric packing element or elements disposed on an outer mandrel. Slips and wedges are used to longitudinally compress the packer elements so that they deform radially outwardly to sealingly engage the well casing. Metal packer shoes are used on opposite ends of the elastomeric elements. In some cases, the packer elements may disengage from the packer shoes which can result in the packer failing to seal properly in the wellbore. If this occurs, it may be necessary to retrieve the entire tool string with the packer and repeat the operation with a new or repaired packer.

When production packers are set in wellbores, a typical application utilizes an inner tool or tubing string being run downhole with a seal unit on the end thereof which is adapted to fit into the packer and seal on an inner surface thereof. A typical seal unit utilizes a molded seal having annular metal rings disposed on opposite sides of an annular elastomeric member. Such seals have worked well, but occasionally, the rubber can separate from the metal annular portions which may cause an undesired leak of production fluid.

A specific packer application is one in which gravel packing is carried out adjacent to a formation or zone of interest in a wellbore. A gravel packer is set adjacent to the formation, and an inner tubing or tool string is run into the packer so that sand and fluid may be pumped downwardly through the packer and out into the formation. Sealing elements between the lower end of such a tool string and the packer include an annular metal ring with spaced elastomeric portions disposed radially outwardly thereon. It is extremely important that the seal between the elastomeric portions and the metal portions be strong so that the elastomeric portions do not extrude or come loose. If this occurs, sand can pass between the inner tool string and the packer which can cause the tool to stick.

In still another application in which a strong elastomeric and metal seal is desirable is in a wireline valve on the wellhead. Such a valve is used when wireline is in the well. The valve has pressure seal rams which are designed to require no adjustment and be closed quickly to seal around the wireline without damage to the line should pressure increase undesirably. The Otis wireline valve utilizes an elastomeric member which has metal backup plates on the top and bottom. Again, if the elastomeric portion breaks loose from the metal portion, or if the metal portion does not supply adequate support for the elastomeric portion, a seal failure may occur which could possibly be catastrophic.

In all of the above described oil and gas well equipment applications, it is seen that a need exists for increasing the shear strength of the bond between a metal portion and an elastomeric portion molded thereto. The present invention solves this problem by providing an elastomeric portion molded to a sintered metal portion. The natural porosity of the sintered metal provides many small openings in the surface thereof. During the molding process, the elastomeric portion extends into the porous openings which greatly increases the shear strength of the bond between the elastomeric member and the sintered metal portion. Also, the elastomeric member may be a plurality of elastomeric elements incorporated into the sintering process so that at least some of the many cavities and openings in the sintered metal portion have elastomeric elements therein.

Basically, sintered metal is a metal prepared by heating compressed metal powder to form a substantially solid component. Other elements may be included with the powder in this process. For example, graphite may be included with iron powder to form sintered steel. Sintering is the welding together and growth of contact area between two or more initially distinct particles of the powder at temperatures below the melting point, but generally above one-half of the melting point. The rate of sintering is greater with smaller particles than larger particles, so the process is most important with powders. Usually, sintering is accomplished by also providing pressure. This compacting of the powder is generally done at room temperature, and the resulting compact is subsequently sintered at elevated temperature without application of the pressure. In some cases, pressure and temperature may be applied simultaneously.

The final density of this sintered metal compact, and the corresponding degree of porosity therein, depends upon the pressure with which the powder is compacted and upon the shrinkage of the compact during sintering. Frequently, it is desirable to have a fairly porous structure. For example, sintered metal components may be used as filters for filtering particles out of liquids. In the present invention, it is preferable to use a fairly porous structure so that the elastomeric portion will extend therein to provide the increased bond strength previously discussed.

The present invention provides a variety of embodiments of sealing apparatus such as may be used in oil and gas well equipment, although the invention is not intended to be limited to well applications. A common aspect of the sintered metal sealing apparatus is that it comprises a sintered metal portion and an elastomeric portion molded thereto. The sintered metal portion is inherently porous, and the molding process is such that at least a portion of the elastomeric portion extends into porous openings in a surface of the sintered metal portion. In at least one application, the elastomeric portion may include elements or pieces impregnated into cavities and openings defined in the sintered metal portion.

In one embodiment, the sintered metal portion has a tubular configuration, and the elastomeric portion is molded around an outer circumferential surface of this metal portion. The elastomeric portion may have a plurality of flexible lips extending radially outwardly therefrom. In this embodiment, the sintered metal seal may be characterized as a piston unit for a through-flowline tool string.

In other embodiments, the sintered metal portion has an annular configuration, and the elastomeric portion also has an annular configuration. In one such embodiment, the elastomeric portion is longitudinally adjacent to the metal portion. This embodiment of the sintered metal seal may be characterized as a molded seal for a seal unit usable in sealing between a tubing string and a production well packer. In a further embodiment, the sintered metal portion is characterized as a packer shoe, and the elastomeric portion is characterized as a packer element for sealing in a wellbore.

In still another embodiment, the elastomeric portion may be disposed radially outwardly from at least a portion of the sintered metal portion. Thus, the sintered metal seal may be characterized as a service seal for a service seal unit used in sealing between a tubing string and a gravel packer in a well.

In a further embodiment, the elastomeric portion is impregnated within at least a portion of the sintered metal portion. This embodiment is useful as a seal block for a wireline valve on a wellhead.

In addition, the concept of molding an elastomeric portion to a sintered metal portion to provide a seal with a strong bond between the elastomeric material and the metal may be applied to many other seal configurations as well as those described herein.

In order that the invention may be more fully understood, embodiments thereof will now be described, by way of illustration only, with reference to the accompanying drawings, wherein:

FIG. 1 illustrates one embodiment of sintered metal seal of the present invention characterized as a piston unit for a through-flowline tool string.

FIG. 1A is an enlarged portion of Fig. 1 illustrating the bonding between elastomeric and sintered metal portions.

FIG. 2 shows a through-flowline tool string utilizing the piston unit of Fig. 1.

FIG. 3 illustrates a typical through-flowline application installation.

FIG. 4 shows another embodiment of sintered metal seal of the invention characterized as a molded packer element with shoes on a compression packer.

FIG. 5 illustrates an embodiment of seal of the invention characterized as a molded seal for use with a production packer.

FIG. 6 illustrates an embodiment of seal of the invention characterized as a seal usable in gravel pack applications.

FIG. 7 illustrates a downhole tool incorporating the seal of Fig. 5.

FIG. 8 shows a downhole tool incorporating the seal of Fig. 6.

FIG. 9 is a partial cross section of wireline valve for use on a wellhead.

FIG. 10 shows a prior art seal block used in the valve of Fig. 9.

FIG. 11 shows part of an embodiment of seal block of the invention incorporating sintered metal impregnated with elastomeric material.

Referring now to the drawings, details of various embodiments of the sintered metal seal of the present invention will be shown and described. Geometrically, most of these embodiments appearing in the drawings are similar to prior art seals utilizing a metal member with an elastomeric sealing element molded thereto. However, in the present invention, the inherent porous nature of the sintered metal provides a plurality of openings and cavities into which the elastomeric material will extend when molded thereto, thus greatly increasing the shear strength from the previous conventional molded seals.

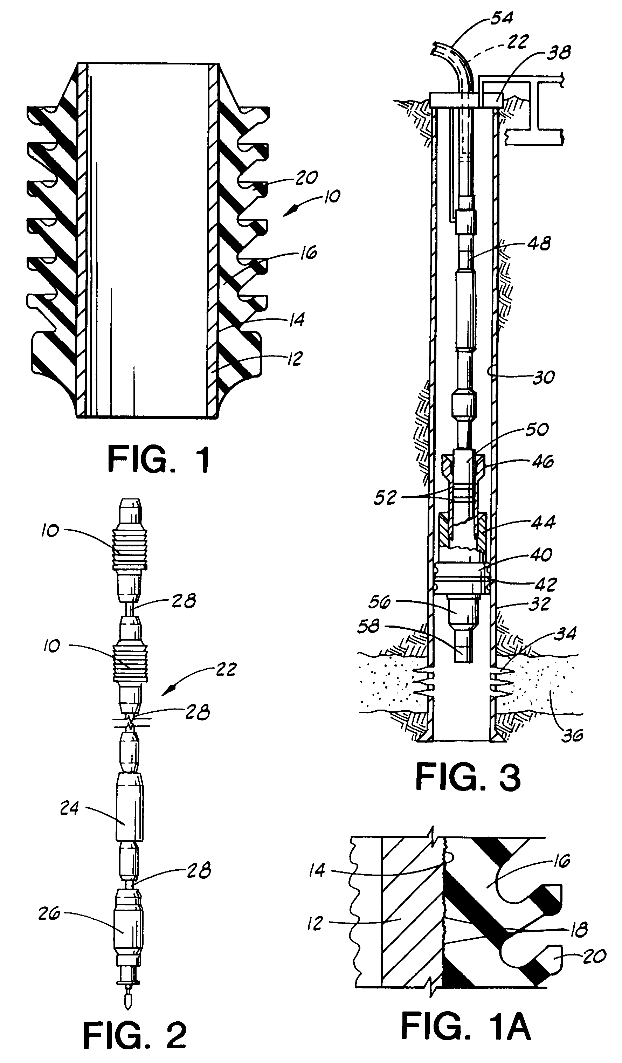

Referring now to FIG. 1, a first embodiment of the sintered metal seal of the present invention is shown as a piston unit, generally designated by the numeral 10, for use with a through-flowline (TFL) tool string. Piston unit 10 comprises a sintered metal portion in the form of a tubular mandrel 12. Mandrel 12 is relatively porous, as previously described, and has a substantially porous outer circumferential surface 14.

An elastomeric portion 16 is molded around mandrel 12. Referring now to FIG. 1A, porous outer surface 14 defines a plurality of small openings therein, such as are generally designated by the numeral 18. In the molding process, at least a portion of the elastomeric material of elastomeric portion 16 will extend into porous openings 18 in outer surface 14. Thus, the elastomeric material tends to interlock with the metal material so that a strong bond is developed therebetween. This inner locking greatly increases the shear strength of the bond.

Referring again to FIG. 1, elastomeric portion 16 has a plurality of lips or rings 20 extending radially outwardly thereon.

Referring now to FIG. 2, a TFL tool string 22 is shown which incorporates a plurality of piston units 10. Any number of such piston units 10 may be used to transport TFL tool string 22 in and out of a well. A variety of other components may be incorporated in tool string 22, such as a hydraulic jar 24 and a TFL tool 26. The various components are connected by swivel joints 28 so that tool string 22 is quite flexible.

Referring to FIG. 3, a typical TFL application is shown for a well 30. Well 30 has a casing 32 disposed therein having a plurality of perforations 34 which open into a formation or zone of interest 36. Below wellhead 38, a variety of components are disposed in casing 32. Adjacent to formation 36 is a hydraulic set permanent packer 40 with a packer element 42 sealingly engaged with casing 32. Packer 40, as illustrated, has a latching seal unit receiver, such as the Otis Ratch-Latch® seal unit receiver, at the upper end thereof. Engaged with seal unit receiver 44 is a polished bore receptacle 46 latchingly engaged with the seal unit receiver.

Extending downwardly from wellhead 38 is a tubing string 48 having a seal unit 50 at the lower end thereof. Seal unit 50 has a plurality of seals 52 thereon which are adapted for sealingly engaging the polished bore in receptacle 46.

Tubing 54 extends from tubing string 48 upwardly to the surface and to various controls (not shown) for the system.

On the lower side of packer 40 are a seal bore extension 56 and a landing nipple 58. Landing nipple 58 is adapted for receiving a TFL tool 26 on tool string 22. Tool string 22 is dropped into tubing 54 in a manner known in the art and pumped downwardly until TFL tool 26 engages landing nipple 58. TFL tool 26 may be left in landing nipple 58, and the remainder of tool string 28 pumped upwardly by reverse circulation. Later, variations of tool string 22 may be used to retrieve any tool left in landing nipple 58, in a manner known in the art.

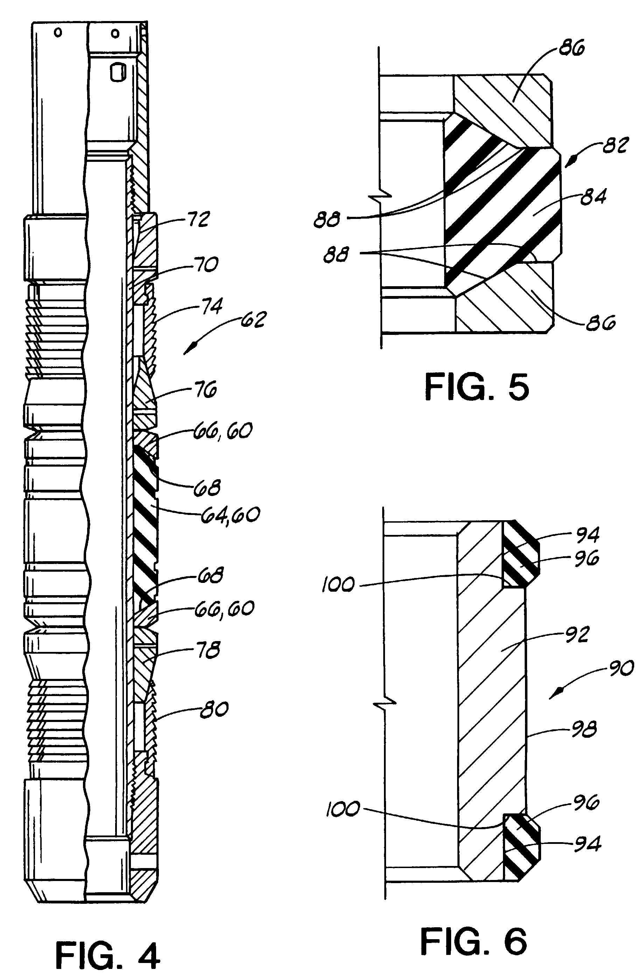

Referring now to FIG. 4, another embodiment of the sintered metal seal of the present invention is shown as a packer element assembly 60 as used on a compression packer 62. Packer element assembly 60 comprises an elastomeric portion or packer element 64 with sintered metal portions or shoes 66 on opposite longitudinal ends of the packer element. Packer shoes 66 are molded to packer element 64 so that a strong bond occurs along surface 68. The details of this bond are substantially the same as that shown in FIG. 1A, previously described for the piston seal embodiment 10.

Packer 62 is conventional except for packer element assembly 60. Packer 62 comprises an inner mandrel 70 on which packer seal assembly 60 is disposed. Also disposed around mandrel 70 are upper internal slips 72, upper slips 74, upper packer wedge 76, lower packer wedge 78 and lower slips 80.

Packer 62 may be made in a configuration of any of a variety of compression packers, such as the Otis Wireline-Set Perma-SeriesÔ packers, although the invention is not intended to be limited to any particular packer configuration. Those skilled in the art will see that packer element assembly 60 may be incorporated into virtually any prior art compression packer.

In the operation of packer 62, upper and lower wedges 76 and 78 are moved toward one another so that packer shoes 66 are correspondingly moved. This causes packer element 64 to compress longitudinally and extrude radially outwardly to sealingly engage the well casing. The strong bond along surface 68 between packer element 64 and packer shoes 66 insures that the packer element does not easily separate from the packer shoes, thus insuring proper setting and operation of packer 62.

During the setting operation, upper and lower slips 74 and 80 are moved radially outwardly by sliding engagement along upper and lower wedges 76 and 78, respectively, to grippingly engage the wellbore to hold packer 62 in place. The actual setting and operation of packer 62 is of a kind generally known in the art.

Referring now to FIG. 5, the sintered metal seal of the present invention is shown as a molded seal 82 for use on a molded seal unit adapted for engaging a production well packer, as will be further described herein. Molded seal 82 comprises an elastomeric portion 84 with sintered metal portions 86 molded on opposite longitudinal sides of the elastomeric portion. Elastomeric portion 84 is generally annular, as are metal portions 86. Sintered metal portions 86 may also be referred to as backup or support rings. The geometry of molded seal 82 is substantially the same as that of known prior art molded seals. As with the previously described embodiments, the distinction with molded seal 82 is that metal portions 86 are made of sintered metal and have the corresponding porosity. Thus, a strong bond is formed between the elastomeric material of elastomeric portion 84 and surface 88 of metal portions 86. The details of this bond are substantially the same as shown in FIG. 1A for the first embodiment.

FIG. 6 illustrates the sintered metal seal of the present invention characterized as a service seal 90 adapted for sealingly engaging an inner surface in a gravel packer in gravel pack applications. With such service seals, sand tends to stick to the tool if there is too much rubber. That is, if the elastomeric material of the seal deflects or extrudes too much, sand can jam the tool in the packer, as will be further described herein. Accordingly, service seal 90 includes a relatively large sintered metal portion or ring 92 defining a pair of outwardly opening grooves 94 on opposite longitudinal ends thereof. Annular elastomeric portions or rings 96 are molded into grooves 94 and extend slightly outwardly from outer surface 98 of metal portion 92. Because of the porous nature of sintered metal portion 92, a strong bond is formed between elastomeric portions 96 along grooves 94 and shoulders 100. As with the other embodiments, the details of the bond between elastomeric portions 96 and sintered metal portion 92 are substantially the same as that shown in FIG. 1A, previously described for the first embodiment.

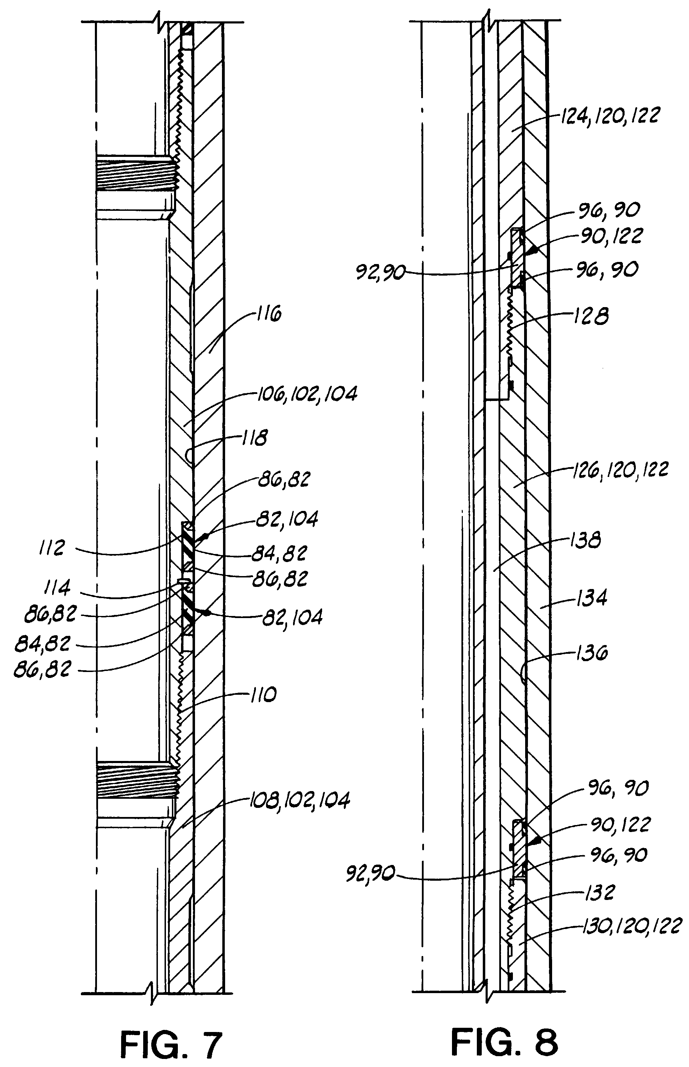

Referring now to FIG. 7, a pair of molded seals 82 (see FIG. 5) are shown on a mandrel 102 of a molded seal unit 104. Mandrel 102 includes an upper mandrel portion 106 and a lower mandrel portion 108 attached at threaded connection 110. The upper molded seal 82 is positioned adjacent to a shoulder 112 on upper mandrel portion 106, and the lower molded seal 82 is positioned adjacent to a retainer ring 114 engaged with the upper mandrel portion.

Molded seal unit 104 is shown disposed in a production packer 116 of a kind known in the art, and elastomeric portions 84 of molded seals 82 are in sealing engagement with an inner bore 118 in packer 116. The increased strength of the bond between elastomeric portion 84 and metal portions 86, previously described, insures a good strong seal between molded seal unit 104 and packer 116.

Now referring to FIG. 8, a pair of service seals 90 (see FIG. 6) are shown as part of a service mandrel 120 of a gravel pack unit 122. Service mandrel 120 comprises an upper mandrel portion 124 attached to an intermediate mandrel portion 126 at threaded connection 128, intermediate mandrel portion 126 being connected to a lower mandrel portion 130 at threaded connection 132. The upper service seal 90 is disposed between upper mandrel portion 124 and intermediate mandrel portion 26, and the lower service seal 90 is disposed between intermediate mandrel portion 126 and lower mandrel portion 130.

Gravel pack unit 122 is adapted for positioning in a gravel packer 134, of a kind known in the art. Elastomeric portions 96 of each service seal 90 are adapted for sealing engagement with an inner bore 136 in gravel packer 134.

In a gravel packing operation, sand and fluid are pumped downwardly through a central opening 138 in service mandrel 120 and out of the packer into the adjacent well formation. Sand can be forced between service mandrel 120 and packer 134. Sand tends to stick gravel pack unit 122 in gravel packer 134 if it can pass by elastomeric portions 96 of service seals 90. A strong bond between elastomeric portions 96 and metal portion 92 of each service seal 90 greatly decreases the likelihood of seal failure and the resulting sticking caused by the sand.

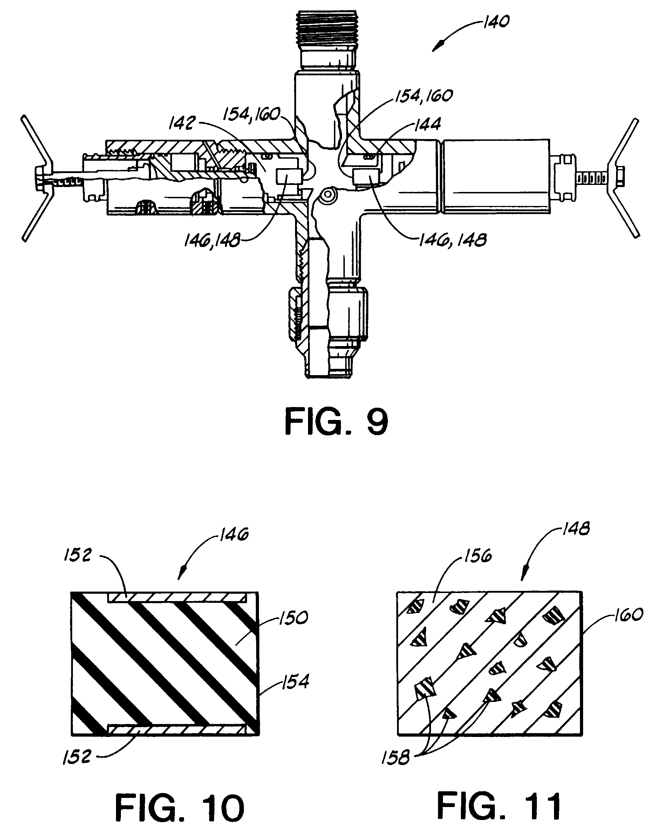

Referring now to FIG. 9, a wireline valve 140 is shown. Such a wireline valve is coupled to the top of the wellhead adapter or Christmas tree (not shown) and is designed to permit work to be performed on surface equipment above the wireline valve while the wireline is in the well. Wireline valve 140 has a pair of pressure seal ram assemblies 142 and 144 which are designed to require no adjustment and may be closed quickly to seal around the wireline without damage to the line. Each ram assembly 142 and 144 has a parallelepiped-shaped seal block which actually engages the wireline. Referring to FIGS. 10 and 11, a prior art seal block 146 and a new seal block 148 of the present invention are shown, respectively.

First, referring to FIG. 10, prior art seal block 146 includes a large elastomeric portion 150 supported on opposite sides thereof by a pair of spaced backup plates 152. A face 154 of elastomeric portion 150 engages the wireline when rams 142 and 144 in wireline valve 140 are actuated. Elastomeric portion 150 has some flexibility, and it is possible that it can be torn or deformed by the wireline.

Referring now to FIG. 11, the new seal block 148 of the present invention is shown comprising a sintered metal portion 156 with an elastomeric portion characterized by a plurality of elastomeric elements or pieces 158 impregnated in the metal portion. This is accomplished by mixing elements 158 with the powdered metal used to form sintered metal portion 156 prior to the sintering process. In other words, an elastomeric powder, such as a rubber powder, is mixed with a metal powder to form seal block 148 by the sintering procedure. The result is a relatively hard seal block with sufficient flexibility as a result of elastomeric elements 158 so that face 160 of seal block 148 can engage and seal against a wireline when hydraulic rams 142 and 144 are actuated. Because of the strength of the sintered metal impregnated with elastomeric material, seal block 148 cannot fail in the same manner as prior art seal block 146.

The bond between sintered metal portion 146 and elastomeric elements 158 is extremely strong, and the elastomeric elements fill at least some of the small openings and cavities defined in the porous sintered metal portion.

As previously mentioned, in each of the various embodiments of the sintered metal seal of the present invention, the geometry and dimensional aspects of the embodiments is substantially the same as that in the prior art except that sintered metal is substituted for steel or other material. The bonding of the elastomeric portion to the sintered metal portion in each embodiment provides a much stronger shear strength between the elastomeric material and the sintered metal, thus providing a superior seal to those of the prior art. In the seal block embodiment of FIG. 11, the sintered metal is actually impregnated with the elastomeric material.

## Claims

1. A sealing apparatus (10) which comprises a sintered metal portion (12) and an elastomeric portion (16) molded to said sintered metal portion (12).

2. Apparatus according to claim 1, wherein said elastomeric portion (16) is molded around an outer surface (14) of said metal portion (12).

3. Apparatus according to claim 1, wherein said sintered metal portion (86) is one of a pair of spaced sintered metal portions (86) disposed on opposite sides of said elastomeric portion (84).

4. Apparatus according to claim 1, wherein said elastomeric portion (96) is one of a pair of spaced elastomeric portions (96) disposed on opposite sides of said sintered metal portion (92).

5. Apparatus according to claim 1, wherein said elastomeric portion (16) has a flexible lip (20) extending therefrom.

6. Apparatus according to any of claims 1 to 5, wherein said sintered metal portion (12,86,92) has an annular configuration; and said elastomeric portion (16,84,96) has an annular configuration.

7. Apparatus according to claim 6, wherein said elastomeric portion (84,96) is longitudinally adjacent to said sintered metal portion (86,92).

8. Apparatus according to claim 1, wherein said sintered metal portion (12) has a tubular configuration; and said elastomeric potion (16) is molded around an outer circumferential surface (14) of said sintered metal portion (12).

9. Apparatus according to claim 1, wherein said elastomeric portion (16) is disposed radially outwardly from at least a portion of said sintered metal portion (12).

10. Apparatus according to claim 1, wherein said elastomeric portion (158) is impregnated within at least a portion of said sintered metal portion (156).

11. Oil and/or gas well equipment which comprises a sealing apparatus as claimed in any of claims 1 to 10.
